# EUROPEAN PATENT APPLICATION

(11) **EP 4 530 848 A1**
(43) Date of publication of application: **02.04.2025**
(21) Application number: 24202852.0
(22) Date of filing: 26.09.2024
(51) Int. Cl.: G06F 9/50

(54) **METHOD, APPARATUS, DEVICE, AND STORAGE MEDIUM FOR RESOURCE CONFIGURATION**

(30) Priority: 27.09.2023 CN 202311267220
(71) Applicant: Beijing Zitiao Network Technology Co., Ltd., Beijing 100190 (CN)
(72) Inventor: XIE, Qianjun, Beijing, 100028 (CN); ZHANG, Jingyi, Beijing, 100028 (CN); CHEN, Xiangliang, Beijing, 100028 (CN); AN, Xiongshan, Beijing, 100028 (CN); GE, Shijian, Beijing, 100028 (CN); ZHANG, Yongsu, Beijing, 100028 (CN); ZHANG, Yu, Beijing, 100028 (CN); WANG, Jian, Beijing, 100028 (CN)
(74) Representative: Dentons UK and Middle East LLP

(57) **Abstract**

Embodiments of the disclosure provide a method, an apparatus, a device, and a storage medium for resource configuration. The method includes obtaining an indication for the number of nodes of a NUMA node of a processor socket; dividing acceleration resources of an accelerator into at least one acceleration resource queue based on the number of nodes; and by associating the at least one acceleration resource queue to a respective NUMA node included in the processor socket, causing a plurality of processor cores divided into the respective NUMA node to use the at least one acceleration resource queue based on the association. Thus, the availability of the accelerator may be improved.

## Description

### CROSS-REFERENCE

This application claims the benefit of CN Patent Application No. 202311267220.6 filed on September 27, 2023, and entitled "METHOD, APPARATUS, DEVICE, AND STORAGE MEDIUM FOR RESOURCE CONFIGURATION", which is incorporated herein by reference in its entirety.

### FIELD

Example embodiments of the disclosure generally relate to the field of computers, and in particular, to a method, an apparatus, a device, and a computer-readable storage medium for resource configuration.

### BACKGROUND

**Currently,** accelerators have been widely used in computing devices. The accelerators can implement a wide variety of functions, such as artificial intelligence (AI) inference, encryption and decryption computing tasks, and the like. The accelerators tend to efficiently handle some particular task as compared to a processor core, while also having significant advantages in terms of power consumption and area. An accelerator in a computing device may be scheduled by running an application on a processor core of the computing device, the processor core accelerating various tasks or operations in the application by invoking the accelerator. Therefore, how the processor core schedules the acceleration resources provided by the accelerator to improve the processing performance of the computing device is worthy of concern.

### SUMMARY

In a first aspect of the disclosure, a method for resource configuration is provided. The method comprises: obtaining an indication for the number of nodes of a Non-Uniform Memory Access, NUMA, node of a processor socket; dividing acceleration resources of an accelerator into at least one acceleration resource queue based on the number of nodes; and by associating the at least one acceleration resource queue to a respective NUMA node included in the processor socket, causing a plurality of processor cores divided into the respective NUMA node to use the at least one acceleration resource queue based on the association.

In a second aspect of the disclosure, an apparatus for resource configuration is provided. The apparatus includes: an obtaining module configured to obtain an indication for a number of nodes of a Non-Uniform Memory Access, NUMA, node of a processor socket; a dividing module configured to divide acceleration resources of an accelerator into at least one acceleration resource queue based on the number of nodes; and an invoking module configured to, by associating the at least one acceleration resource queue to a respective NUMA node included in the processor socket, cause a plurality of processor cores divided into the respective NUMA node to use the at least one acceleration resource queue based on the association.

In a third aspect of the disclosure, an electronic device is provided. The electronic device includes at least one memory coupled to the at least one processing unit and storing instructions for execution by the at least one processing unit, the instructions, when executed by the at least one processing unit, causing the electronic device to perform the method of the first aspect.

In a fourth aspect of the disclosure, a computer-readable storage medium is provided. The computer-readable storage medium has a computer program stored thereon, the computer program being executable by a processor to implement the method of the first aspect.

It should be understood that the content described in this content section is not intended to limit the key features or important features of the embodiments of the disclosure, nor is it intended to limit the scope of the disclosure. Other features of the disclosure will become readily understood from the following description.

### BRIEF DESCRIPTION OF DRAWINGS

The above and other features, advantages, and aspects of various embodiments of the disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the disclosure may be implemented;
FIG. 2 is a schematic diagram of a process of a method for resource configuration according to some embodiments of the disclosure;
FIG. 3 illustrates a schematic diagram of an association relationship between a NUMA node and an acceleration resource queue according to some embodiments of the disclosure;
FIG. 4 illustrates a schematic diagram of a process of invoking an acceleration resource by an application according to some embodiments of the disclosure;
FIG. 5 illustrates a block diagram of an apparatus for resource configuration according to some embodiments of the disclosure; and
FIG. 6 illustrates a block diagram of a device capable of implementing various embodiments of the disclosure.

### DETAILED DESCRIPTION

Embodiments of the disclosure will be described in more detail below with reference to the accompanying drawings. While certain embodiments of the disclosure are shown in the accompanying drawings, it should be understood that the disclosure may be implemented in various forms, and should not be construed as limited to the embodiments set forth herein, but rather, these embodiments are provided for a more thorough and complete understanding of the disclosure. It should be understood that the drawings and embodiments of the disclosure are for exemplary purposes only and are not intended to limit the scope of the disclosure.

It should be noted that the headline of any section/subsection provided herein is not limiting. Various embodiments are described herein and any type of embodiments may be included in any section/subsection. Furthermore, the embodiments described in any section/subsection may be combined in any manner with the same section/subsection and/or any other embodiment described in different sections/subsections.

In the description of the embodiments of the disclosure, the terms "comprising" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definition may also be included below. The terms "first," "second," and the like may refer to different or identical object. Other explicit and implicit definition may also be included below.

As briefly mentioned above, accelerators are widely used in computing devices. How the processor core schedules the acceleration resources provided by the accelerator to improve the processing performance of the computing device is worthy of concern. Currently, a processor usually uses a non-uniform memory access (NUMA) architecture. In this architecture, different memory devices and processor cores belong to different NUMA nodes. Each NUMA node includes one or more processor cores, and each NUMA node has its own integrated memory controller (IMC). With the wide application of lifting and chip lets technologies in semiconductor process, there are more and more NUMA node that need to be split on a single processor socket. That is, multiple processor cores on a single processor socket are split to multiple different NUMA nodes. In this case, how the accelerator is used by the processor core in the NUMA node is worth discussion.

When an accelerator accesses a memory across NUMA node, there is a relatively large access delay due to an interconnection limitation between processor sockets or dice. The socket or die here is a packaging unit of the processor core. In general, a socket may include multiple dice, each of which may encapsulate multiple processor cores.

To avoid this problem, a common practice in the current computing device is to configure a corresponding NUMA node for the accelerator, and limit the processor core using the accelerator and the accelerator to be in the same NUMA node. In this solution, the accelerator can only be used by the processor core in the NUMA node to which the accelerator belongs, but cannot be used by the processor core in other NUMA node. Therefore, this solution has the problem of limited use of the accelerator.

For example, multiple processor cores of a processor socket are divided into four NUMA nodes of NUMA0, NUMA1, NUMA2, NUMA3, and the corresponding NUMA node configured for the accelerator is NUMA1 node. Then, only the processor core in the NUMA1 Node can use the accelerator, and the processor core of the other NUMA node cannot use the accelerator.

In order to solve the problem that the use of the accelerator is limited, there is still another solution to adjust and configure the NUMA through an accelerator software, and then allocate the use of the accelerator, so that all processor cores in the plurality of NUMA node can use the accelerator. Complex software logic needs to be configured in this solution. Moreover, the software needs to dynamically check the current NUMA configuration of the computing device, and then dynamically allocate the use of the accelerator according to the NUMA configuration. This further increases the complexity of the software configuration.

In order to at least partially solve the problems existing in the existing solutions, the disclosure proposes a solution for resource configuration. In this solution, the computing device obtains an indication for the number of nodes of a NUMA node of a processor socket. Based on the number of nodes, acceleration resources of an accelerator are divided into at least one acceleration resource queue, and then by associating the at least one acceleration resource queue to a respective NUMA node, a plurality of processor cores divided into the respective NUMA node are caused to use the at least one acceleration resource queue based on the association. In this way, multiple NUMA nodes may use the respective acceleration resource queue. On the one hand, the availability of the accelerator may be improved. On the other hand, in this embodiment, the foregoing resource configuration may be completed by using the firmware, thereby reducing development difficulty of the accelerator software.

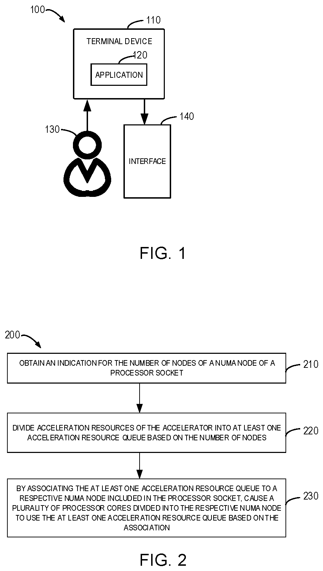

FIG. 1 illustrates a schematic diagram of an example environment 100 in which embodiments of the disclosure may be implemented. In the environment 100, one or more applications 120 may be installed in a computing device 110. The application 120 may be, for example, an application for file decompression, an application for graphics processing, and the like. The embodiments of the disclosure do not limit the type and quantity of applications. The application 120 runs on a processor core of the computing device 110. In the embodiments of the disclosure, the processor architecture of the computing device 110 may adopt the above-mentioned NUMA architecture, that is, multiple processor cores in the processor socket are divided into multiple NUMA nodes.

**In** some cases, if the application 120 needs to perform tasks such as AI inference, encryption and decryption, the processor core running the application may use the accelerator to perform these tasks. In the embodiments of the disclosure, there may be one or more accelerators. In addition, the accelerator may include an accelerator that operates on data, such as a vector accelerator, an AI accelerator, or the like. The accelerator may also include an accelerator, such as an encryption accelerator, a compression accelerator, a graphics accelerator, etc., executing a particular algorithm on a dedicated hardware. The embodiments of the disclosure do not limit the type and quantity of accelerators.

In some embodiments of the disclosure, an accelerator may be presented as a platform device that includes multiple acceleration resources. The plurality of acceleration resources in one accelerator may be divided into a plurality of acceleration resource queue.

The computing device 110 may also present an interface 140. The user 130 can perform an interactive operation through the interface 140, for example, operating the application 120 or the like.

**In** some embodiments of the disclosure, the user 130 may also configure the number of NUMA node based on the interface 140 presented by the computing device 110. Further, the computing device 110 may divide acceleration resources of the accelerator based on the number of NUMA node to obtain a plurality of acceleration resource queue, and establish an association relationship between the NUMA nodes and the acceleration resource queue, so that the NUMA node can use the corresponding acceleration resource queue. The specific implementation thereof is described in detail hereinafter.

**In** the environment 100, the computing device 110 may be any type of device having computing capability, including a computing device or a server device. The computing device may be any type of mobile terminal, fixed terminal, or portable terminal, including a mobile handset, a desktop computer, a laptop computer, a notebook computer, a netbook, a tablet computer, a medium computer, a multimedium tablet, a personal communication system (PCS) device, a personal navigation device, a personal digital assistant (PDA), an audio/video player, a digital camera/camcorder, a pointing device, a television receiver, a radio broadcast receiver, an e-book device, a gaming device, or any combination of the foregoing, including accessories and peripherals of these devices, or any combination thereof. The server device may include, for example, a computing system/server, such as a mainframe, an edge computing node, a computing device in a cloud environment, or the like.

It should be understood that the structure and function of the environment 100 is described for exemplary purposes only and does not imply any limitation to the scope of the disclosure.

Some example embodiments of the disclosure will be described below with continued reference to the accompanying drawings.

FIG. 2 shows a flowchart of a process 200 for resource configuration according to some embodiments of the disclosure. The process 200 may be implemented at the computing device 110. The process 200 is described below with reference to FIG. 1.

At block 210, the computing device 110 obtains an indication for the number of nodes of a NUMA node of a processor socket.

As mentioned above, the processor may employ a NUMA architecture. In this architecture, multiple processor cores in the processor socket may be divided into multiple NUMA nodes. One NUMA node may include one or more processor cores.

In some embodiments, the computing device 110 may present an entry for setting the number of nodes of the NUMA node. The entry may be, for example, a configuration item, a configuration menu, or the like presented by the computing device. The user may instruct the menu through the entry to configure the number of nodes of the NUMA node. Correspondingly, the computing device 110 may obtain, by using the entry, the number of NUMA node indicated by the user.

In some embodiments, the computing device 110 may obtain an indication of the number of NUMA node through an entry provided by the firmware. For example, the preset configuration item may be presented in a startup menu of the firmware, and the user may set the preset configuration item to indicate the number of NUMA node.

As an example, a boot mode of the firmware in the embodiments of the disclosure may be a unified extensible firmware interface (UEFI) mode. The firmware of this mode may also be referred to as UEFI firmware. It may be understood that the UEFI is merely an example, and the boot mode of the firmware may also be another mode, such as a BIOS mode. This is not limited in the embodiments of the disclosure.

As an example, in a boot menu of the UEFI firmware, a selection item containing several NUMA nodes (NUMA Per Socket, PS) is definition for each socket. The user may manually select how many NUMA nodes each socket has, that is, set the number of NUMA node that each socket may be obtain by dividing. Further, a configuration of a selection item of the NUMA (NUMA Per Socket), that is, the number of NUMA node, may be stored in an Advanced Configuration and Power Interface (ACPI) table.

In some embodiments, the computing device 110 may further divide a plurality of processor cores associated with the processor socket to respective NUMA node based on the number of nodes.

For example, in response to the value of the option of the NUMA Per Socket being set to M (the value of M being a positive integer), the plurality of processor cores in the processor socket are divided into M NUMA nodes. A process of specifically dividing the processor core based on the number of NUMA node may be, for example, an average division manner, that is, the number of processor cores included in each NUMA node is equal. The disclosure does not limit the specific configuration implementation of the NUMA node.

In embodiments of the disclosure, the number of nodes obtained by the computing device 110 may be further used to divide acceleration resources provided by the accelerator and establish an association relationship between the acceleration resource queue and the NUMA node obtained through division in addition to being used to divide the NUMA node. See the description of block 220 and block 230 below.

At block 220, the computing device 110 divides acceleration resources of the accelerator into at least one acceleration resource queue based on the number of nodes.

The accelerator typically uses a queue as an interface for application interaction, each queue having a corresponding register for operating by the application. In the embodiments of the disclosure, the queue may be presented as independent devices by using firmware.

In other words, as mentioned above, one accelerator may be presented as a platform device containing multiple acceleration resources. Multiple acceleration resources in one accelerator may be divided into multiple acceleration resource queues and presented as separate devices. That is, the accelerator may be further divided into smaller granularity.

In some embodiments, in response to dividing the processor core in the processor socket into M NUMA nodes, the acceleration resource provided by one accelerator may be divided into N acceleration resource queues. M and N are both positive integers. The value of N may be equal to M. In other words, when the number of NUMA node is M, the number of acceleration resource queue may also be M. Of course, in some cases, the number N of the acceleration resource queues may also be not equal to M, for example, N is greater than M or less than M.

In some embodiments, the quantity of acceleration resources in each acceleration resource queue obtained through division may be the same or different. For example, when the quantity of processor cores in each NUMA node is the same, the quantity of acceleration resources in each acceleration resource queue may also be the same. For another example, when the quantity of processor cores in each NUMA node is different, the acceleration resource queue may also be divided according to the quantity of processor cores of different NUMA nodes. Specifically, the quantity of acceleration resources in the acceleration resource queue may be directly proportional to the quantity of processor cores in the associated corresponding NUMA node. In this way, there may be more acceleration resources in the acceleration resource queue, and then the association between the acceleration resource queue and the NUMA node having a relatively large number of processor cores may be established. The acceleration resource in the acceleration resource queue may be used by a processor core in the NUMA node. The embodiments of the disclosure do not limit the dividing policy of acceleration resources in the acceleration resource queue.

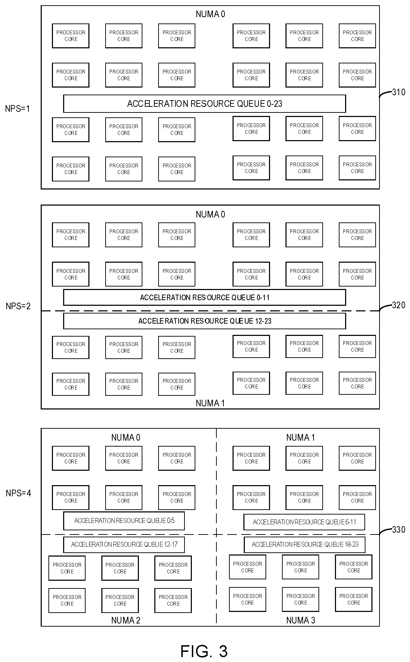

In some embodiments, acceleration resources in the accelerator are identified by different numbers. For example, referring to FIG. 3, the acceleration resource queue 0-11 represents that the acceleration resource queue includes acceleration resources numbered 0-11. Similarly, the acceleration resources included in the other acceleration resource queue in FIG. 3 may be deduced by analogy, and the embodiments of the disclosure are not enumerated.

Next, by presenting the accelerator as an acceleration resource queue, different NUMA configurations may be compatible. See block 230 specifically.

At block 230, by associating the at least one acceleration resource queue to a respective NUMA node included in the processor socket, the computing device 110 causes a plurality of processor cores divided into the respective NUMA node to use the at least one acceleration resource queue based on the association.

By associating the acceleration resource queue to NUMA node, different NUMA configurations may be compatible. For example, a single socket may be configured to contain 1 NUMA node, 2 NUMA nodes, or 4 NUMA nodes. Each NUMA configuration may associate an acceleration resource queue to the corresponding NUMA node, so that the accelerator may be used by all NUMA node in each NUMA configuration.

In some embodiments, the relationship between the acceleration resource queue and the NUMA node may be a one-to-one correspondence. That is, the number of acceleration resource queue is the same as the number of NUMA node. An acceleration resource queue may be associated to a NUMA node, to be used by a processor core in the NUMA node.

For example, refer to block 310 in FIG. 3. When the value of the NPS is 1, that is, the processor socket only includes one NUMA node NUMA0. The acceleration resource in the accelerator is identified by a number 0-23, that is, divided to obtain an acceleration resource queue 0-23 which may be used by the processor core in the NUMA0. Reference is made to block 320 in FIG. 3. When the value of the NPS is 2, that is, the processor socket includes two NUMA nodes NUMA0 and NUMA1. Correspondingly, the accelerator is also divided into two acceleration resource queues (acceleration resource queue 0-11 and acceleration resource queue 12-23). And the acceleration resource queue 0-11 may be used by the processor core of NUMA0, and the acceleration resource queue 12-23 may be used by the processor core of NUMA1. Reference is made to block 330 in FIG. 3. When the value of the NPS is 4, that is, the processor socket includes four NUMA nodes NUMA0, NUMA1, NUMA2, and NUMA3. Correspondingly, the accelerator is also divided into four acceleration resource queues (acceleration resource queue 0-5, acceleration resource queue 6-11, acceleration resource queue 12-17, and acceleration resource queue 18-23). In addition, the acceleration resource queue 0-5 may be used by the processor core of the NUMA0, the acceleration resource queue 6-11 may be used by the processor core of the NUMA1, the acceleration resource queue 12-17 may be used by the processor core of the NUMA2, and the acceleration resource queue 18 to 23 may be used by the processor core of the NUMA 3.

It may be understood that, in the example of FIG. 3, in a case where there are multiple NUMA nodes, the number of processor cores included in each NUMA node is the same. Correspondingly, the quantity of acceleration resources allocated to each NUMA node is the same. This is just one example of dividing NUMA nodes and allocating the acceleration resource queue. In other examples, the number of processor cores in different NUMA nodes may be different, and correspondingly, the number of acceleration resources in the acceleration resource queue allocated to different NUMA nodes may be different. For example, for a NUMA node that includes more processor cores, acceleration resources included in an acceleration resource queue allocated to the node may also be more. In addition, a correspondence relationship between the NUMA node identifier and the acceleration resource queue identifier is not limited. In other examples, for example, for a case where NPS = 4, the acceleration resource queue allocated to the node of NUMA0 may further be an acceleration resource queue composed of acceleration resources 6-11.

In some embodiments, there may be no one-to-one relationship between the acceleration resource queue and the NUMA node. For example, for a NUMA node that includes more processor cores, there may be two acceleration resource queues allocated to the NUMA node. For another example, for some NUMA node including fewer processor cores, the NUMA nodes may share a same acceleration resource queue. Of course, these NUMA nodes sharing the same acceleration resource queue may also need to meet other conditions, for example, when the accelerator accesses the memory of different NUMA nodes, the access latency needs to meet a certain threshold condition.

In some embodiments, the computing device 110 may further generate a description for the established association relationship based on the association between the at least one acceleration resource queue and the corresponding NUMA node. The description indicates at least a respective identifier of at least one acceleration resource queue associated with the respective NUMA node. As such, if at least one core within a NUMA node (also referred to as a first node) is to use the accelerator, then, a first acceleration resource queue assigned to the first node may be determined based on the description. And the at least one core accelerates with the acceleration resources in the first acceleration resource queue.

As an example, the ACPI table mentioned above includes the Differentiated System Description Table (DSDT) table. Then, the NUMA node information may be configured in the ACPI table, and then the firmware may link the association relationship between the identifier of the acceleration resource queue and the identifier of the NUMA node in the DSDT table. Therefore, software processes running on different NUMA nodes can use corresponding acceleration resource queue. For example, when the value of the NPS is 1 by default, the accelerator is allocated to the current NUMA node for use, and the description of the association relationship between the accelerator and the NUMA node is generated in the DSDT.

In some cases, the number of NUMA node may be adjusted. For example, the user changes the value of the NPS according to actual needs. Then, in response to the number of nodes of the NUMA node changing, the association between the at least one acceleration resource queue and the corresponding NUMA node is automatically adjusted, and the description is updated based on the adjusted association relationship. In other words, the association relationship is a linkage configuration with the number of NUMA node. If the NUMA node is adjusted, the association between the acceleration resource queue identifier and the NUMA node is automatically adjusted without user configuration.

Still referring to the foregoing example, when the value of the NPS is changed, the association relationship between the NUMA node in the DSDT table and the identifier of the acceleration resource queue is updated.

In some embodiments of the disclosure, the above linkage configuration may be completed through firmware. The firmware may dynamically adjust the association between the accelerator and the NUMA node according to the NUMA configuration of the processor core, and the flexibility is high. Also, there is no need to make any changes to the accelerator software. In addition, hardware details and configuration changes of the operating system/accelerator software are shielded, without any change, it may be ensured that the accelerator is used by the processor core of the appropriate NUMA node, which helps to improve the utilization rate of the device and the performance of the whole system.

The following describes a process of using an accelerator by a processor core based on a configured association relationship.

In some embodiments of the disclosure, in the initialization stage of each hardware device in the computing device, the device hardware configuration information is obtained through the loading drive program. Based on the device hardware configuration information, the foregoing description that can indicate the acceleration resource queue identifier and the NUMA node identifier may be obtained. For example, the association relationship recorded in the DSDT table mentioned above. The description is exposed to the application. In this way, if an application wants to use the accelerator to accelerate, the accelerator needs to be invoked by the processor core running the application, and then the accelerator may be invoked according to the exposed description to obtain the association relationship between the NUMA node and the acceleration resource.

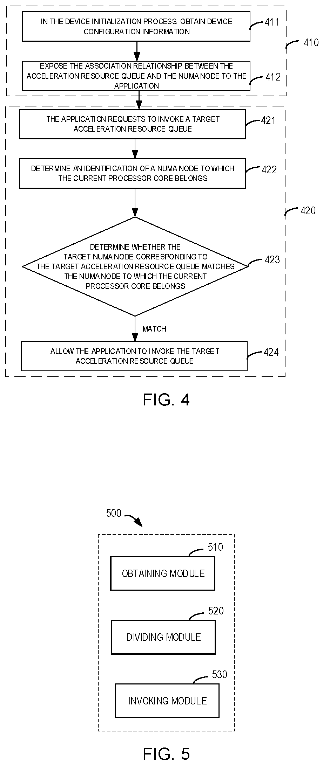

FIG. 4 depicts a process by which a processor core running an application uses an accelerator. The process includes a device initialization process 410 and an accelerator invoked process 420.

Referring to FIG. 4, the device initialization process 410 is specifically as follows.

At block 411, in the device initialization process, device configuration information is obtained. For example, the device configuration information includes an ACPI table, a DSDT table, and the like mentioned above. The device configuration information may be obtained through a preset function (for example, a probe function). At block 412, the association relationship between the acceleration resource queue and the NUMA node is exposed to the application. For example, the association relationship between the acceleration resource queue identifier and the NUMA node identifier in the ACPI table and the DSDT table is exposed to the application.

For an application that needs to use the acceleration resources, the accelerator invoked process 420 is as follows.

At block 421, the application requests to invoke a target acceleration resource queue. The target acceleration resource queue may be an acceleration resource determined by the application based on a task currently to be performed, for example, an acceleration resource used for AI inference. At block 422, the application determines an identification of a NUMA node to which the current processor core belongs. At block 423, it is determined whether the target NUMA node corresponding to the target acceleration resource queue matches the NUMA node to which the current processor core belongs. At block 424, if a match, the application is allowed to invoke the target acceleration resource queue. If the identifier of the target NUMA node does not match the NUMA node to which the current processor core belongs, the acceleration resource queue associated with the NUMA node to which the current processor core belongs is invoked.

FIG. 5 is a schematic structural block diagram of an apparatus 500 for resource configuration according to some embodiments of the disclosure. The apparatus 500 may be implemented or included in the computing device 110. Various modules/components in the apparatus 500 may be implemented by hardware, software, firmware, or any combination thereof.

As shown in FIG. 5, the apparatus 500 includes an obtaining module 510 configured to obtain an indication for the number of nodes of a NUMA node of a processor socket; the apparatus 500 further includes a dividing module 520 configured to divide acceleration resources of an accelerator into at least one acceleration resource queue based on the number of nodes; and the apparatus 500 further includes a invoking module 530 configured to, by associating the at least one acceleration resource queue to a respective NUMA node included in the processor socket, cause a plurality of processor cores divided into the respective NUMA node to use the at least one acceleration resource queue based on the association.

**In** some embodiments, the obtaining module 510 is further configured to present an entry for setting the number of nodes; and obtain the indication through the entry.

**In** some embodiments, the dividing module 520 is further configured to divide the plurality of processor cores associated with the processor socket into the respective NUMA node based on the number of nodes.

**In** some embodiments, the apparatus 500 further includes a generating module configured to generate a description for an association relationship based on the association of the at least one acceleration resource queue with the respective NUMA node, the description indicating at least a respective identifier of the at least one acceleration resource queue associated with the respective NUMA node.

In some embodiments, the invoking module 530 is further configured to, in response to at least one core within a first node of the respective NUMA node being about to use the accelerator, determine a first acceleration resource queue of the at least one acceleration resource queue allocated to the first node based on the description; and cause the at least one core to be accelerated with acceleration resources in the first acceleration resource queue.

In some embodiments, the generating module is further configured to, in response to the number of nodes being changed, adjust the association of the at least one acceleration resource queue with the respective NUMA node; and update the description based on the adjusted association relationship.

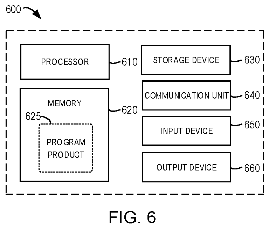

FIG. 6 shows a block diagram illustrating an electronic device 600 in which one or more embodiments of the disclosure may be implemented. It should be understood that the electronic device 600 illustrated in FIG. 6 is merely exemplary and should not constitute any limitation on the functionality and scope of the embodiments described herein. The electronic device 600 shown in FIG. 6 may be configured to implement the electronic device 110 in FIG. 1.

As shown in FIG. 6, the electronic device 600 is in the form of a general-purpose electronic device. Components of the electronic device 600 may include, but are not limited to, one or more processors or processing units 610, a memory 620, a storage device 630, one or more communication units 640, one or more input devices 650, and one or more output devices 660. The processing unit 610 may be an actual or virtual processor and capable of performing various processes according to programs stored in the memory 620. In a multiprocessor system, multiple processing units execute computer-executable instructions in parallel to improve parallel processing capabilities of the electronic device 600.

The electronic device 600 typically includes a plurality of computer storage medium. Such medium may be any available medium accessible to the electronic device 600, including, but not limited to, volatile and non-volatile medium, removable and non-removable medium. The memory 620 may be volatile memory (e.g., registers, caches, random access memory (RAM)), non-volatile memory (e.g., read-only memory (ROM), electrically erasable programmable read-only memory (EEPROM), flash memory), or some combination thereof. The storage device 630 may be a removable or non-removable medium and may include a machine-readable medium, such as a flash drive, magnetic disk, or any other medium, which may be capable of storing information and/or data and may be accessed within the electronic device 600.

The electronic device 600 may further include additional removable/non-removable, volatile/non-volatile storage medium. Although not shown in FIG. 6, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data medium interface. The memory 620 may include a computer program product 625 having one or more program modules configured to perform various methods or actions of various embodiments of the disclosure.

The communication unit 640 is configured to communicate with another electronic device through a communication medium. Additionally, the functionality of components of the electronic device 600 may be implemented in a single computing cluster or multiple computing machines capable of communicating over a communication connection. Thus, the electronic device 600 may operate in a networked environment using logical connections with one or more other servers, network personal computers (PCs), or another network node.

The input device 650 may be one or more input devices such as a mouse, a keyboard, a trackball, or the like. The output device 660 may be one or more output devices, such as a display, a speaker, a printer, or the like. The electronic device 600 may also communicate with one or more external devices (not shown) through the communication unit 640 as needed, external devices such as storage devices, display devices, etc., communicate with one or more devices that enable a user to interact with the electronic device 600, or communicate with any device (e.g., a network card, a modem, etc. ) that enables the electronic device 600 to communicate with one or more other electronic devices. Such communication may be performed via an input/output (I/O) interface (not shown).

According to example implementations of the disclosure, there is provided a computer-readable storage medium having computer-executable instructions stored thereon, wherein the computer-executable instructions are executed by a processor to implement the method described above. According to example implementations of the disclosure, a computer program product is further provided, the computer program product being tangibly stored on a non-transitory computer-readable medium and including computer-executable instructions, the computer-executable instructions being executed by a processor to implement the method described above.

Aspects of the disclosure are described herein with reference to flowcharts and/or block diagrams of methods, apparatuses, devices, and computer program products implemented in accordance with the disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations of the disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the disclosure have been described above, which are exemplary, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for resource configuration, comprising:
obtaining (210) an indication for the number of nodes of a Non-Uniform Memory Access, NUMA, node of a processor socket;
dividing (220) acceleration resources of an accelerator into at least one acceleration resource queue based on the number of nodes; and
by associating the at least one acceleration resource queue to a respective NUMA node included in the processor socket, causing (230) a plurality of processor cores divided into the respective NUMA node to use the at least one acceleration resource queue based on the association.

2. The method of claim 1, wherein obtaining (210) the indication comprises:
presenting an entry for setting the number of nodes; and
obtaining the indication through the entry

3. The method of claim 1 or claim 2, further comprising:
dividing the plurality of processor cores associated with the processor socket into the respective NUMA node based on the number of nodes.

4. The method of claim 1 or claim 2, further comprising:
generating a description for an association relationship based on the association of the at least one acceleration resource queue with the respective NUMA node, the description indicating at least a respective identifier of the at least one acceleration resource queue associated with the respective NUMA node.

5. The method of claim 4, further comprising:
in response to at least one core within a first node of the respective NUMA node being about to use the accelerator, determining a first acceleration resource queue of the at least one acceleration resource queue allocated to the first node based on the description; and
causing the at least one core to be accelerated with acceleration resources in the first acceleration resource queue.

6. The method of claim 4, further comprising:
in response to the number of nodes being changed, adjusting the association of the at least one acceleration resource queue with the respective NUMA node; and
updating the description based on the adjusted association relationship.

7. An apparatus (500) for resource configuration, comprising:
an obtaining module (510) configured to obtain an indication for a number of nodes of a Non-Uniform Memory Access, NUMA, node of a processor socket;
a dividing module (520) configured to divide acceleration resources of an accelerator into at least one acceleration resource queue based on the number of nodes; and
an invoking module (530) configured to, by associating the at least one acceleration resource queue to a respective NUMA node included in the processor socket, cause a plurality of processor cores divided into the respective NUMA node to use the at least one acceleration resource queue based on the association.

8. The apparatus (500) of claim 7, wherein the obtaining module (510) is further configured to:
present an entry for setting the number of nodes; and
obtain the indication through the entry

9. The apparatus (500) of claim 7 or claim 8, wherein the dividing module (520) is further configured to:
divide the plurality of processor cores associated with the processor socket into the respective NUMA node based on the number of nodes.

10. The apparatus (500) of claim 7 or claim 8, wherein the apparatus (500) further comprises a generating module configured to:
generate a description for an association relationship based on the association of the at least one acceleration resource queue with the respective NUMA node, the description indicating at least a respective identifier of the at least one acceleration resource queue associated with the respective NUMA node.

11. The apparatus (500) of claim 10, wherein the invoking module (530) is further configured to:
in response to at least one core within a first node of the respective NUMA node being about to use the accelerator, determine a first acceleration resource queue of the at least one acceleration resource queue allocated to the first node based on the description; and
cause the at least one core to be accelerated with acceleration resources in the first acceleration resource queue.

12. The apparatus (500) of claim 10, wherein the generating module is further configured to:
in response to the number of nodes being changed, adjust the association of the at least one acceleration resource queue with the respective NUMA node; and
update the description based on the adjusted association relationship.

13. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1-6.

14. A computer-readable storage medium having a computer program stored thereon, the computer program being executable by a processor to implement the method of any of claims 1-6.
